# EUROPÄISCHE PATENTSCHRIFT

(11) **EP 2 872 793 B1**
(45) Veröffentlichungstag und Bekanntmachung des Hinweises auf die Patenterteilung: **11.09.2019**
(21) Anmeldenummer: 13715887.9
(22) Anmeldetag: 12.03.2013
(51) Int. Cl.: B62D 5/04, F16C 23/08, F16F 1/32

(54) **Elektromechanische Kraftfahrzeugslenkung mit einem Spindeltrieb mit einem Wälzlager, einer Kugelmutter und einer axial darauf wirksamen Wellfeder mit bereichsweise linearer Kennlinie**
Electromechanic vehicle steering with spindle drive and a belleville spring acting upon the ball nut of a roller bearing of the spindle drive with the spring having partially linear characteristics
Direction électromécanique de véhicule avec entraînement de la broche et ressort Belleville agissant sur l'écrou à billes d'un roulement à rouleaux de l'entraînement de la broche, le ressort ayant des caractéristiques partiellement linéaires

(30) Priorität: 16.07.2012 DE 102012013924
(43) Veröffentlichungstag der Anmeldung: 20.05.2015
(73) Patentinhaber: ThyssenKrupp Presta AG, 9492 Eschen (LI); thyssenkrupp AG, 45143 Essen (DE)
(72) Erfinder: LÁSZLÓ, Gergely, 73734 Esslingen-Berkheim (DE)
(74) Vertreter: thyssenkrupp Intellectual Property GmbH
(86) Internationale Anmeldenummer: PCT/EP2013/000721
(87) Internationale Veröffentlichungsnummer: WO 2014/012602

(56) Entgegenhaltungen:
- DE-A1- 2 600 946
- DE-A1-102006 037 479
- DE-A1-102010 002 958
- DE-A1-102010 029 304
- JP-A- H02 134 430
- US-A- 1 763 146
- US-A- 2 587 016

## Beschreibung

Die vorliegende Erfindung betrifft eine elektromechanische Kraftfahrzeuglenkung mit Merkmalen des Oberbegriffs des Anspruchs 1 und einen Spindeltrieb zur Verwendung in einer elektromechanischen Kraftfahrzeuglenkung.

Wellfedern sind im allgemeinen Ringe aus einem Federstahl, die in Umfangsrichtung periodisch gewellt sind. Wellfedern werden zur Federung in ihrer Axialrichtung eingesetzt, beispielsweise um einen Lagerring in Axialrichtung federnd in einem Lagersitz abzustützen. Die Wellfeder liegt dabei im entspannten Zustand mit ihren Maxima an den beiden sich gegenüber liegenden Flächen, beispielsweise einem Ringbund eines Lagersitzes einerseits und einer axialen Stirnfläche eines Lageraußenrings andererseits, an. Wenn die beiden Bauelemente einander angenähert werden, wird die Wellfeder in Axialrichtung komprimiert. Bei einer einfachen Ausführungsform einer Wellfeder, die aus einem flachen geschlossenen Ringkörper mit einer sinusförmigen Wellenstruktur besteht, wird im Allgemeinen eine lineare Kennlinie angenommen. Die lineare Kennlinie bewirkt, dass mit zunehmender Kompression der Wellfeder die Federkraft proportional zum Federweg steigt. In vollständig komprimierten Zustand liegt das Material der Wellfeder flach an beiden Bauelementen an. Die entstehende Kraft steigt dabei schlagartig sehr stark an, da kein weiterer Federweg zur Verfügung steht. Solche Federn weisen deshalb keine Endlagendämpfung auf.

Andere Wellfedern weisen eine progressive Kennlinie auf, bei denen zum Endbereich des Federweges hin die Rückstellkraft stark ansteigt. Eine solche progressive Kennlinie verhindert bei geeigneter Ausprägung, dass im normalen Betrieb die Komponenten einen harten Anschlag am Ende des Federweges erfahren. Verschiedene Ausführungsformen sind aus den Druckschriften US 6,758,465 B1, US 5,803,444 und EP 1 477 701 B1 bekannt.

Bei manchen Anwendungen ist auch vorteilhaft, eine Wellfeder einsetzen zu können, die zu beginn des Federweges eine lineare Kennlinie aufweist, die dann ab einem bestimmten Federweg in eine progressive Kennlinie übergeht. Eine solche Feder, die den gattungsbildenden Stand der Technik darstellt, ist aus der deutschen Offenlegungsschrift DE 10 2004 018 711 A1 bekannt. Diese Feder weist in Umfangsrichtung des Ringkörpers eine Wellenstruktur auf, die nicht exakt sinusförmig ist, sondern im Bereich der Maxima in bestimmter Weise abgeplattet ist. Die Höhe dieser Wellenstruktur ist an der in Radialrichtung innen liegenden Umfangsseite der Wellfeder dieselbe wie an der radial außen liegenden Umfangsseite. Solche Federn können in manchen Einbausituationen dazu neigen, in ihrem Querschnitt zu verkippen. Weiter ist es fertigungstechnisch schwierig, genau definierte Kennlinien zu erzielen. Ein gattungsgemäßes Kugelumlaufgetriebe ist aus der Druckschrift DE 10 2010 029 266 A1 bekannt. Bei diesem Dokument sind zwei Federelemente vorgesehen, von denen je eines an der Stirnseite des Lageraußenrings zwischen dem Außenring und dem benachbarten Gehäuse angeordnet ist. Auf diese Weise kann das Lager in beiden Axialrichtungen bei Stoßbelastung gegen die Federkraft ausweichen. Im Ruhezustand bei montiertem Lager sind die beiden beidseits des Lagers vorgesehenen Federelemente vorgespannt und befinden sich in diesem Zustand im progressiven Bereich ihrer Kennlinie. Die Federelemente selbst weisen einen Außenradius auf, der etwa dem Außenradius des Lageraußenrings entspricht, sowie einen Innenradius, der dem Innenradius des Lageraußenrings entspricht. Der Lageraußenring überdeckt also die ringförmigen Federelemente, die als Tellerfedern oder Wellfedern ausgebildet sein können, vollständig.

Für die vorgesehene Funktion der angefederten Lagerung in dieser Druckschrift ist es entscheidend, dass das Lager in dem beschriebenen Ruhezustand mittig zwischen den beiden Ringflächen sitzt, die das Gehäuse als Widerlager für die Federelemente aufweist. Der vorgesehene Federweg bei derartigen Lagerungen ist relativ gering. Er liegt beidseits des Lagers bei jeweils rund 0,1 mm. Problematisch ist bei dieser Lagerung, dass geringfügige Toleranzen der Federelemente dazu führen, dass das Lager im Ruhezustand außermittig zwischen den Anlageflächen des Gehäuses montiert ist. Diese sogenannte Dezentrierung des Lagers kann so weit gehen, dass eines der Federelemente bereits im Ruhezustand ganz oder nahezu vollständig komprimiert ist und der konstruktiv vorgesehene Federweg des Lagers an dieser Seite folglich nicht zur Verfügung steht.

Die DE 10 2010 029 266 A1 offenbart eine elektromechanische Kraftfahrzeuglenkung umfassend einen Spindeltrieb in einem Lenkungsgehäuse, mit einem Wälzlager einer Kugelmutter und einer axial wirksamen Wellfeder zur axialen Anfederung eines Lageraußenrings des Wälzlagers in dem Lenkungsgehäuse, wobei die axial wirksame Wellfeder mit einen geschlossenen Ringkörper mit einer zentralen x-Achse hat, wobei der Ringkörper über dem Umfang in Richtung der x-Achse periodisch gewellt ist. Aus der DE 10 2006 037 479 A1 oder der DE 10 2010 002 958 sind ebenfalls derartige Kraftfahrzeuglenkungen bekannt. Die daraus bekannte elastische Abstützung mittels Wellfedern ermöglicht einen Ausgleich von axialen Toleranzen, beispielsweise aufgrund von Wärmedehnung. Durch Lastwechsel verursachte Taumelbewegungen oder Kippungen können jedoch nur unzureichend aufgenommen werden.

Es ist deshalb Aufgabe der vorliegenden Erfindung eine Kraftfahrzeuglenkung zu schaffen, mit einer optimierten Wellfeder zur verbesserten elastische Abstützung von Taumelbewegungen und Kippungen. Diese Aufgabe wird von einer Kraftfahrzeuglenkung mit den Merkmalen des Anspruchs 1 und durch einen Spindeltrieb mit den Merkmalen des Anspruchs 18 gelöst.

Gelöst wird diese Aufgabe erfindungsgemäß durch eine elektromechanische Kraftfahrzeuglenkung umfassend einen Spindeltrieb in einem Lenkungsgehäuse, mit einem Wälzlager einer Kugelmutter und einer axial wirksamen Wellfeder zur axialen Anfederung eines Lageraußenrings des Wälzlagers in dem Lenkungsgehäuse, wobei die Aaxial wirksame Wellfeder mit einenm geschlossenem Ringkörper mit einer zentralen x-Achse hat, wobei der Ringkörper über dem Umfang in Richtung der x-Achse periodisch gewellt ist, wobei in Richtung der x-Achse eine Federhöhe vorgesehen ist, die an dem Innenumfang der Wellfeder eine andere ist als an dem Außenumfang der Wellfeder, wobei die Wellfeder ausgehend von dem Ruhezustand mit Federweg Null und Federkraft Null zunächst eine lineare Kennlinie bis hin zu einem Federweg von 0,5 mm und einer Federkraft von etwa 200 N hat, und anschließend die Federkonstante stark ansteigt und die Wellfeder bis hin zu einem Federweg von etwa 0,57 mm und einer Federkraft von etwa 1000 N eine zweite lineare Kennlinie aufweist.

Ausgehend von dem Ruhezustand mit Federweg Null und Federkraft Null ergibt sich zunächst eine lineare Kennlinie bis hin zu einem Federweg von 0,5 mm und einer Federkraft von etwa 200 N. Anschließend steigt die Federkonstante stark an und es ergibt sich bis hin zu einem Federweg von etwa 0,57 mm und einer Federkraft von etwa 1000 N eine zweite lineare Kennlinie. Bei dem weiteren Federweg zwischen 0,57 und 0,6 mm wird die Wellfeder stark progressiv. Dadurch eignen sich die Wellfedern nicht nur für ausschließlich axiale Belastung, sondern können in begrenztem Umfang auch Taumelbewegungen oder Kippungen gegenüber der x-Achse aufnehmen und elastisch abstützen.

Weil bei einer axial wirksamen Wellfeder mit einem geschlossenem Ringkörper mit einer zentralen x-Achse, der über dem Umfang in Richtung der x-Achse periodisch gewellt ist, die Federhöhe an dem Innendurchmesser der Wellfeder eine andere ist als an dem Außendurchmesser der Wellfeder, können über den verfügbaren Federweg unterschiedliche Bereiche mit unterschiedlichen Kennlinien einfach definiert werden. Die Kontaktpunkte oder Kontaktlinien zwischen den gefederten Flächen und der Wellfeder selbst kann im Verlaufe der Kompression der Feder dann von einer punktförmigen Anlage im Bereich der größten Federhöhe radial nach innen oder radial nach außen wandern und über das Verhältnis der Federhöhen an dem Innendurchmesser und dem Außendurchmesser kann die Kennlinie eingestellt werden, so dass sich hier wenigsten ein freier Parameter ergibt, der im Stand der Technik nicht zur Verfügung stand.

Vorzugsweise ist die Federhöhe an dem Innendurchmesser des Ringkörpers der Wellfeder größer als die Federhöhe an dem Außendurchmesser des Ringkörpers. Die Federhöhe an dem Außendurchmesser des Ringkörpers kann von 20 % bis 80 % der an dem Innendurchmesser vorliegenden Federhöhe betragen, vorzugsweise 40% bis 60%. Bei einem anderen Ausführungsbeispiel kann die Federhöhe an dem Außendurchmesser zwischen 10% und 30% der Federhöhe an dem Innendurchmesser betragen. Bei einer besonderen Ausführungsform ist vorgesehen, dass die Federhöhe am Außendurchmesser mehr als 25% der Federhöhe am Innendurchmesser beträgt. Insbesondere kann vorgesehen sein, dass die Federhöhe am Außendurchmesser des Ringkörpers gleich Null ist, dort also die Wellfeder flach ist. Die vorgenannten Werte gelten auch bei einer Umkehrung der Federhöhen. So kann in einer anderen bevorzugten Ausführungsform die Federhöhe an dem Außendurchmesser des Ringkörpers der Wellfeder größer als die Federhöhe an dem Innendurchmesser des Ringkörpers.

Die Federhöhe an dem Innendurchmesser des Ringkörpers kann von 20 % bis 80 % der an dem Außendurchmesser vorliegenden Federhöhe betragen, vorzugsweise 40% bis 60%. Bei einem anderen Ausführungsbeispiel kann die Federhöhe an dem Innendurchmesser zwischen 10% und 30% der Federhöhe an dem Außendurchmesser betragen. Bei einer besonderen Ausführungsform ist vorgesehen, dass die Federhöhe am Innendurchmesser mehr als 25% der Federhöhe am Außendurchmesser beträgt. Insbesondere kann vorgesehen sein, dass die Federhöhe am Innendurchmesser des Ringkörpers gleich Null ist, dort also die Wellfeder flach ist.

In der technischen Funktion ergibt sich bei einer Wellfeder, deren Federhöhe am Innenumfang geringer ist als am Außenumfang, ein etwas anderes Verhalten unter Belastung. Die inneren Spannungen in dem Federmaterial werden gegenüber der zuerst beschriebenen Ausführung reduziert, was zu einer Verlängerung der Lebensdauer führt.

Eine bevorzugte Verwendung einer erfindungsgemäßen Wellfeder ist die axiale Anfederung eines Wälzlagers einer Kugelmutter in einem Spindeltrieb, vorzugsweise in einer elektromechanischen Kraftfahrzeuglenkung. Die axiale Anfederung erfolgt dabei vorzugsweise beidseits des Lageraußenrings.

Als besonders vorteilhafte Ausgestaltung wurden Wellfedern mit einer Wellenanzahl zwichen vier und acht Wellen eingesetzt. Eine Anwendung ist aber auch mit einer beliebig anderen Anzahl realisierbar.

Weil bei der Verwendung der Wellfedern zur Lagerung eines Lagerrings in einem Spindeltrieb die ringförmigen, metallischen Wellfedern eine zu Beginn des Federweges lineare und gegen Ende des Federweges eine progressive Kennlinie aufweisen, wird ein Kennlinienverlauf erreicht, bei dem Toleranzen der beiden verwendeten Federelemente, wie beispielsweise Toleranzen in der Federkonstante oder Toleranzen in der lichten Höhe der Federelemente im entspannten Zustand ausgeglichen werden. Es zeigt sich, dass der vorteilhafte Effekt besonders bei der Anfederung eines Lageraußenrings eines Wälzlagers für die Lagerung einer Kugelmutter in einem Lenkungsgehäuse nützlich ist. Dabei wird vorzugsweise beidseits des Lageraußenrings jeweils eine Wellfeder verwendet.

Nachfolgend wird ein Ausführungsbeispiel der vorliegenden Erfindung anhand der Zeichnung näher beschrieben. Es zeigen:
- Figur 1:: eine Wellfeder nach dem Stand der Technik zur Definition der geometrischen Größen;
- Figur 2:: eine erfindungsgemäße Wellfeder in einer Seitenansicht;
- Figur 3:: die Wellfeder aus Figur 2 in einer Einbausituation zwischen zwei Anlaufscheiben, links in einem ersten Querschnitt und rechts in einem um 30 ° gedreht gelegten Querschnitt;
- Figur 4:: die Kennlinie der Wellfeder aus Figur 2;
- Figur 5:: eine Wellfeder mit einem konischen Grundkörper zur Anwendung bei konischen Sitzflächen in einer Seitenansicht;
- Figur 6:: die Wellfeder aus Figur 5 in einem Querschnitt von der Seite; sowie
- Figur 7:: eine Einbaumöglichkeit für die Wellfeder aus Fig. 5 in einem Querschnitt von der Seite.

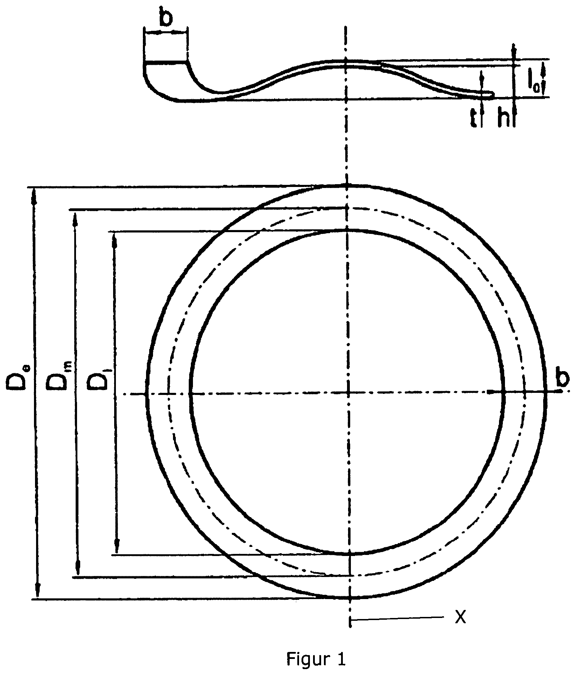

In der Figur 1 ist eine an sich bekannte Wellfeder oben in Seitenansicht und unten in Draufsicht gezeigt, wobei folgende Abmessungen definiert sind:
Seitenansicht:
   b = Ringbreite in Radialrichtung
   t = Ringdicke in Axialrichtung
   l₀ = Federhöhe in entspanntem Zustand
   h = Wellenhöhe
Draufsicht:
   Dₒ = Außendurchmesser
   Dᵢ = Innendurchmesser
   Dₘ = mittlerer Durchmesser
   b = Ringbreite.

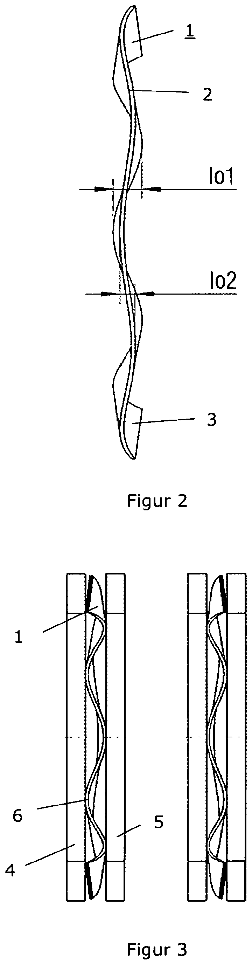

Die Figur 2 zeigt eine erfindungsgemäße Wellfeder 1 in einer Seitenansicht. Dem Betrachter zugewandt ist ein Außenumfang 2 eines Ringkörpers 3. Der Ringkörper ist aus einem Federstahlblech der Dicke t gefertigt. Eine Wellenstruktur ist eingeprägt, die an dem dem Betrachter abgewandten Innenumfang eine erste Federhöhe I₀1 und an dem sichtbaren Außenumfang 2 eine zweite Federhöhe I₀2 ergibt. Die Federhöhe ist dabei die Summe aus der jeweiligen Wellenhöhe h und der Dicke t. Es liegt also an dem Innendurchmesser eine nicht näher bezeichnete erste Wellenhöhe h1 = I₀1 - t und an dem Außendurchmesser eine zweite Wellenhöhe h2 = I₀2 - t vor.

Die Wellfeder 1 weist insgesamt sechs Wellen auf.

In der Figur 3 die Wellfeder 1 in einem Querschnitt von der Seite her gezeigt, wobei sie zwischen einem ersten Bauelement 4 und einem zweiten Bauelement 5 angeordnet ist. Dem Betrachter zugewandt ist hier die Innenseite der Wellfeder 1 mit einem Innenumfang 6. Der Innenumfang 6 weist hier die größere erste Federhöhe I₀1 auf.

Die Bauelemente 4 und 5 können beispielsweise ein Ringbund eines Lagersitzes und ein Lageraußenring eines Wälzlagers sein.

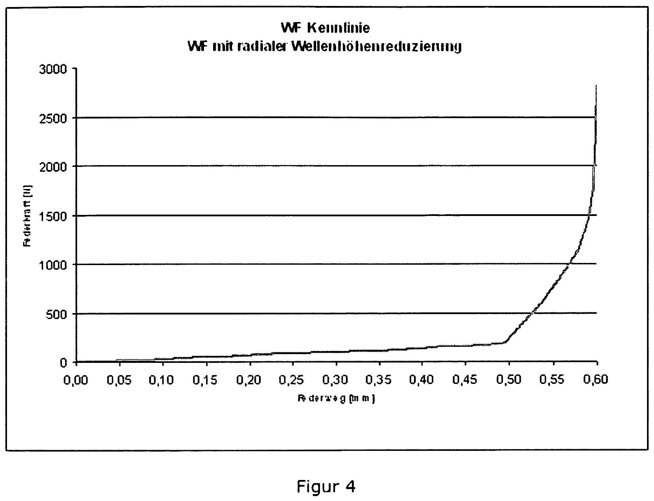

Die Bauelemente 4 und 5 sind durch die Wellfeder auf Abstand gehalten, der in unbelastetem Zustand der ersten Federhöhe I₀1 entspricht. Bei Beaufschlagung mit einer axialen Last nähern sich die Bauelemente 4 und 5 einander an, wobei die Wellfeder 1 mit einer Axialkraft beaufschlagt wird. Aufgrund der Geometrie und der Materialeigenschaften der Wellfeder ergibt sich eine Kennlinie, die nachfolgend anhand der Figur 4 beschrieben wird.

Ausgehend von dem Ruhezustand mit Federweg Null und Federkraft Null ergibt sich zunächst eine lineare Kennlinie bis hin zu einem Federweg von 0,5 mm und einer Federkraft von etwa 200 N. Anschließend steigt die Federkonstante stark an und es ergibt sich bis hin zu einem Federweg von etwa 0,57 mm und einer Federkraft von etwa 1000 N eine zweite lineare Kennlinie. Bei dem weiteren Federweg zwischen 0,57 und 0,6 mm wird die Wellfeder stark progressiv.

Die Kennlinie aus Figur 4 wird mit folgenden Parametern erreicht:
b = 5 mm
t = 0,8 mm
I₀1 = 1,4 mm
I₀2 = 1,2 mm
Dₒ = 90 mm
Dᵢ = 80 mm
Wellenzahl = 6
Elastizitätsmodul = 200.000 N/mm².

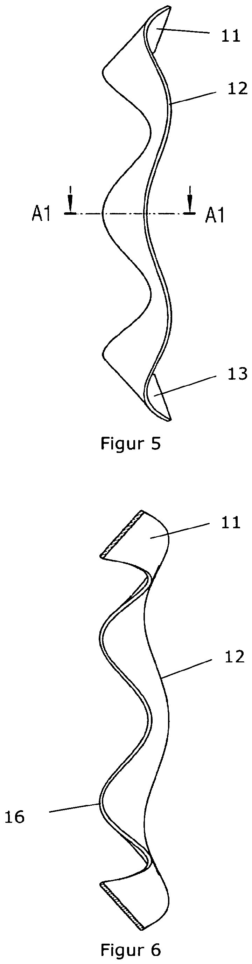

Die Figur 5 zeigt schließlich eine Wellfeder 11 mit einem konischen Grundkörper 13 zur Anwendung bei konischen Sitzflächen. Die Figur 6 zeigt diese Wellfeder 11 in einem Querschnitt von der Seite.

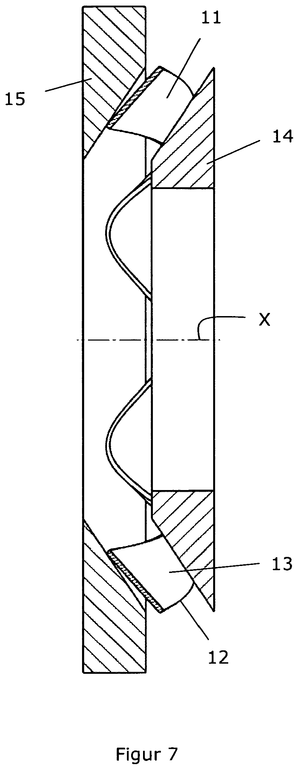

Auch bei dieser Wellfeder 11 ist an dem Innenumfang 16 die erste Federhöhe größer als die an dem Außenumfang 12 vorliegende zweite Federhöhe. Der als Basis dienende Ringkörper 13 ist ein Teil eines Kegelmantels, hier mit einem Winkel von etwa 45° gegenüber der Ebene ausgeführt. Die sich so ergebende Wellfeder 11 kann, wie in Figur 7 dargestellt ist, zwischen zwei Bauelemente 14 und 15 eingesetzt werden, die sich mit im wesentlichen kompatiblen kegelmantelförmigen Flächen gegeneinander abstützen. Die Wellfeder 11 bietet dann ähnliche Eigenschaften wie die Wellfeder 1 aus Figur 2. Insbesondere ist die Kennlinie bei ansonsten ähnlichen Parametern auch der Kennlinie aus Figur 4 ähnlich. Es ergibt sich auch hier eine zunächst lineare Kennlinie mit einem progressiven Verhalten gegen Ende des Federwegs.

Die oben beschriebenen Wellfedern 1 und 11 eignen sich nicht nur für ausschließlich axiale Belastung, sondern können in begrenztem Umfang auch Taumelbewegungen oder Kippungen gegenüber der x-Achse aufnehmen und elastisch abstützen.

## Patentansprüche

1. Elektromechanische Kraftfahrzeuglenkung umfassend einen Spindeltrieb in einem Lenkungsgehäuse, mit einem Wälzlager einer Kugelmutter und einer axial wirksamen Wellfeder (1, 11) zur axialen Anfederung eines Lageraußenrings (5) des Wälzlagers in dem Lenkungsgehäuse, wobei die axial wirksame Wellfeder (1, 11) einen geschlossenen Ringkörper (2, 12) mit einer zentralen x-Achse hat, wobei der Ringkörper (2, 12) über dem Umfang in Richtung der x-Achse periodisch gewellt ist,
wobei in Richtung der x-Achse eine Federhöhe vorgesehen ist, die an dem Innenumfang (6, 16) der Wellfeder (1, 11) eine andere ist als an dem Außenumfang (2, 12) der Wellfeder
**dadurch gekennzeichnet,**
**dass** die Wellfeder (1, 11) ausgehend von dem Ruhezustand mit Federweg Null und Federkraft Null zunächst eine lineare Kennlinie bis hin zu einem Federweg von 0,5 mm und einer Federkraft von etwa 200 N hat, und anschließend die Federkonstante stark ansteigt und die Wellfeder (1, 11) bis hin zu einem Federweg von etwa 0,57 mm und einer Federkraft von etwa 1000 N eine zweite lineare Kennlinie aufweist und dass die Wellenfeder bei dem weiteren Federweg zwischen 0,57 und 0,6 mm stark progressiv wird.

2. Kraftfahrzeuglenkung nach Anspruch 1, **dadurch gekennzeichnet, dass** die Federhöhe an dem Innenumfang (6, 16) grösser ist als die Federhöhe an dem Außenumfang (2, 12).

3. Kraftfahrzeuglenkung nach einem der vorhergehenden Ansprüche, **dadurch gekennzeichnet, dass** die Federhöhe an dem Außenumfang (2, 12) 20 % bis 80% der Federhöhe an dem Innenumfang (6, 16) beträgt.

4. Kraftfahrzeuglenkung nach einem der vorhergehenden Ansprüche 1-2, **dadurch gekennzeichnet, dass** die Federhöhe an dem Außenumfang (2, 12) 10 % bis 30% der Federhöhe an dem Innenumfang (6, 16) beträgt.

5. Kraftfahrzeuglenkung nach einem der vorhergehenden Ansprüche 1-2, **dadurch gekennzeichnet, dass** die Federhöhe an dem Außenumfang (2, 12) Null beträgt.

6. Kraftfahrzeuglenkung nach Anspruch 1, **dadurch gekennzeichnet, dass** die Federhöhe an dem Innenumfang (6, 16) 20 % bis 80% der Federhöhe an dem Außenumfang (2, 12) beträgt.

7. Kraftfahrzeuglenkung nach Anspruch 1, **dadurch gekennzeichnet, dass** die Federhöhe an dem Innenumfang (6, 16) kleiner ist als die Federhöhe an dem Außenumfang (2, 12).

8. Kraftfahrzeuglenkung nach Anspruch 1 oder 7, **dadurch gekennzeichnet, dass** die Federhöhe an dem Innenumfang (6, 16) 20 % bis 80% der Federhöhe an dem Außenumfang (2, 12) beträgt.

9. Kraftfahrzeuglenkung nach Anspruch 1 oder 7, **dadurch gekennzeichnet, dass** die Federhöhe an dem Innenumfang (6, 16) 10 % bis 30% der Federhöhe an dem Außenumfang (2, 12) beträgt.

10. Kraftfahrzeuglenkung nach Anspruch 1 oder 7, **dadurch gekennzeichnet, dass** die Federhöhe an dem Innenumfang (6, 16) Null beträgt.

11. Kraftfahrzeuglenkung nach Anspruch 1, **dadurch gekennzeichnet, dass** die Federhöhe an dem Außenumfang (2, 12) 20 % bis 80% der Federhöhe an dem Innenumfang (6, 16) beträgt.

12. Kraftfahrzeuglenkung nach einem der vorhergehenden Ansprüche, **dadurch gekennzeichnet, dass** der als Basis dienende Ringkörper (12) ein Teil eines Kegelmantels ist.

13. Kraftfahrzeuglenkung nach einem der vorhergehenden Ansprüche, **dadurch gekennzeichnet, dass** die Wellfeder eine gerade Anzahl von Wellen besitzt.

14. Kraftfahrzeuglenkung nach einem der vorhergehenden Ansprüche, **dadurch gekennzeichnet, dass** die Wellfeder eine ungerade Anzahl von Wellen besitzt.

15. Kraftfahrzeuglenkung nach einem der vorhergehenden Ansprüche, **dadurch gekennzeichnet, dass** die Wellfeder eine Anzahl von vier bis acht Wellen besitzt.

16. Kraftfahrzeuglenkung nach einem der vorhergehenden Ansprüche, **dadurch gekennzeichnet, dass** zur Anfederung eines Lageraußenrings (5) eines Wälzlagers für die Lagerung einer Kugelmutter, diese in einem Lenkungsgehäuse angeordnet ist.

17. Kraftfahrzeuglenkung nach einem der vorhergehenden Ansprüche, **dadurch gekennzeichnet, dass** beidseits des Lageraußenrings (5) jeweils eine Wellfeder (1, 11) verwendet wird.

18. Spindeltrieb zur Verwendung in einer Kraftfahrzeuglenkung nach einem der vorhergehenden Ansprüche zur axialen Anfederung eines Wälzlagers einer Kugelmutter mit einer Wellfeder in einem Spindeltrieb.

## Claims

1. Electromechanical motor vehicle steering system comprising a spindle drive in a steering housing, having an anti-friction bearing of a ball nut and an axially acting corrugated spring (1, 11) for axially suspending a bearing outer ring (5) of the anti-friction bearing in the steering housing, the axially active corrugated spring (1, 11) having a closed ring body (2, 12) with a central x-axis, the ring body (2, 12) being corrugated periodically over the circumference in the direction of the x-axis, a spring height being provided in the direction of the x-axis, which spring height is different on the inner circumference (6, 16) of the corrugated spring (1, 11) than on the outer circumference (2, 12) of the corrugated spring, **characterized in that**, starting from the rest state with a spring travel of zero and a spring force of zero, the corrugated spring (1, 11) has first of all a linear characteristic curve up to a spring travel of 0.5 mm and a spring force of approximately 200 N, and subsequently the spring constant rises greatly and the corrugated spring (1, 11) has a second linear characteristic curve up to a spring travel of approximately 0.57 mm and a spring force of approximately 1000 N, and **in that** the corrugated spring becomes greatly progressive in the case of the further spring travel between 0.57 and 0.6 mm.

2. Motor vehicle steering system according to Claim 1, **characterized in that** the spring height on the inner circumference (6, 16) is greater than the spring height on the outer circumference (2, 12).

3. Motor vehicle steering system according to either of the preceding claims, **characterized in that** the spring height on the outer circumference (2, 12) is from 20% to 80% of the spring height on the inner circumference (6, 16) .

4. Motor vehicle steering system according to either of the preceding Claims 1 and 2, **characterized in that** the spring height on the outer circumference (2, 12) is from 10% to 30% of the spring height on the inner circumference (6, 16).

5. Motor vehicle steering system according to either of the preceding Claims 1 and 2, **characterized in that** the spring height on the outer circumference (2, 12) is zero.

6. Motor vehicle steering system according to Claim 1, **characterized in that** the spring height on the inner circumference (6, 16) is from 20% to 80% of the spring height on the outer circumference (2, 12).

7. Motor vehicle steering system according to Claim 1, **characterized in that** the spring height on the inner circumference (6, 16) is smaller than the spring height on the outer circumference (2, 12).

8. Motor vehicle steering system according to Claim 1 or 7, **characterized in that** the spring height on the inner circumference (6, 16) is from 20% to 80% of the spring height on the outer circumference (2, 12).

9. Motor vehicle steering system according to Claim 1 or 7, **characterized in that** the spring height on the inner circumference (6, 16) is from 10% to 30% of the spring height on the outer circumference (2, 12).

10. Motor vehicle steering system according to Claim 1 or 7, **characterized in that** the spring height on the inner circumference (6, 16) is zero.

11. Motor vehicle steering system according to Claim 1, **characterized in that** the spring height on the outer circumference (2, 12) is from 20% to 80% of the spring height on the inner circumference (6, 16).

12. Motor vehicle steering system according to one of the preceding claims, **characterized in that** the ring body (12) which serves as a base is a part of a cone envelope.

13. Motor vehicle steering system according to one of the preceding claims, **characterized in that** the corrugated spring has an even number of corrugations.

14. Motor vehicle steering system according to one of the preceding claims, **characterized in that** the corrugated spring has an odd number of corrugations.

15. Motor vehicle steering system according to one of the preceding claims, **characterized in that** the corrugated spring has a number of from four to eight corrugations.

16. Motor vehicle steering system according to one of the preceding claims, **characterized in that**, in order to suspend the bearing outer ring (5) of an anti-friction bearing for mounting a ball nut, the latter is arranged in a steering housing.

17. Motor vehicle steering system according to one of the preceding claims, **characterized in that** in each case one corrugated spring (1, 11) is used on the two sides of the bearing outer ring (5).

18. Spindle drive for use in a motor vehicle steering system according to one of the preceding claims for axially suspending an anti-friction bearing of a ball nut with a corrugated spring in a spindle drive.

## Revendications

1. Direction électromécanique de véhicule automobile, comprenant un entraînement à broche dans une boîte de direction, avec un palier à roulement d'un écrou sphérique et un ressort ondulé (1, 11) agissant axialement pour la suspension par ressort axial d'une bague de palier externe (5) du palier à roulement dans la boîte de direction, le ressort ondulé (1, 11) agissant axialement présentant un corps annulaire fermé (2, 12) avec un axe x central, le corps annulaire (2, 12) étant ondulé périodiquement sur la périphérie dans la direction de l'axe x,
une hauteur de ressort étant prévue dans la direction de l'axe x, laquelle est différente au niveau de la périphérie intérieure (6, 16) du ressort ondulé (1, 11) de celle au niveau de la périphérie extérieure (2, 12) du ressort ondulé,
**caractérisée en ce que**
le ressort ondulé (1, 11), partant de l'état de repos avec une course de ressort nulle et une force de ressort nulle, présente initialement une courbe caractéristique linéaire jusqu'à une course de ressort de 0,5 mm et une force de ressort d'environ 200 N, puis la constante de ressort augmente fortement et le ressort ondulé (1, 11), jusqu'à une course de ressort d'environ 0,57 mm et une force de ressort d'environ 1000 N, présente une deuxième courbe caractéristique linéaire et **en ce que** le ressort ondulé devient fortement progressif pour la course de ressort supplémentaire comprise entre 0,57 et 0,6 mm.

2. Direction de véhicule automobile selon la revendication 1, **caractérisée en ce que** la hauteur de ressort au niveau de la périphérie intérieure (6, 16) est supérieure à la hauteur de ressort au niveau de la périphérie extérieure (2, 12).

3. Direction de véhicule automobile selon l'une quelconque des revendications précédentes, **caractérisée en ce que** la hauteur de ressort au niveau de la périphérie extérieure (2, 12) vaut 20 % à 80 % de la hauteur de ressort au niveau de la périphérie intérieure (6, 16).

4. Direction de véhicule automobile selon l'une quelconque des revendications 1 à 2, **caractérisée en ce que** la hauteur de ressort au niveau de la périphérie extérieure (2, 12) vaut 10 % à 30 % de la hauteur de ressort au niveau de la périphérie intérieure (6, 16).

5. Direction de véhicule automobile selon l'une quelconque des revendications 1 à 2, **caractérisée en ce que** la hauteur de ressort au niveau de la périphérie extérieure (2, 12) est nulle.

6. Direction de véhicule automobile selon la revendication 1, **caractérisée en ce que** la hauteur de ressort au niveau de la périphérie intérieure (6, 16) vaut 20 % à 80 % de la hauteur de ressort au niveau de la périphérie extérieure (2, 12).

7. Direction de véhicule automobile selon la revendication 1, **caractérisée en ce que** la hauteur de ressort au niveau de la périphérie intérieure (6, 16) est inférieure à la hauteur de ressort au niveau de la périphérie extérieure (2, 12).

8. Direction de véhicule automobile selon la revendication 1 ou 7, **caractérisée en ce que** la hauteur de ressort au niveau de la périphérie intérieure (6, 16) vaut 20 % à 80 % de la hauteur de ressort au niveau de la périphérie extérieure (2, 12).

9. Direction de véhicule automobile selon la revendication 1 ou 7, **caractérisée en ce que** la hauteur de ressort au niveau de la périphérie intérieure (6, 16) vaut 10 % à 30 % de la hauteur de ressort au niveau de la périphérie extérieure (2, 12).

10. Direction de véhicule automobile selon la revendication 1 ou 7, **caractérisée en ce que** la hauteur de ressort au niveau de la périphérie intérieure (6, 16) est nulle.

11. Direction de véhicule automobile selon la revendication 1, **caractérisée en ce que** la hauteur de ressort au niveau de la périphérie extérieure (2, 12) vaut 20 % à 80 % de la hauteur de ressort au niveau de la périphérie intérieure (6, 16).

12. Direction de véhicule automobile selon l'une quelconque des revendications précédentes, **caractérisée en ce que** le corps annulaire (12) servant de base est une partie d'une enveloppe conique.

13. Direction de véhicule automobile selon l'une quelconque des revendications précédentes, **caractérisée en ce que** le ressort ondulé possède un nombre pair d'ondulations.

14. Direction de véhicule automobile selon l'une quelconque des revendications précédentes, **caractérisée en ce que** le ressort ondulé présente un nombre impair d'ondulations.

15. Direction de véhicule automobile selon l'une quelconque des revendications précédentes, **caractérisée en ce que** le ressort ondulé possède un nombre de quatre à huit ondulations.

16. Direction de véhicule automobile selon l'une quelconque des revendications précédentes, **caractérisée en ce que** pour la suspension sur ressort d'une bague de palier externe (5) d'un palier à roulement pour le support sur palier d'un écrou sphérique, ce dernier est disposé dans une boîte de direction.

17. Direction de véhicule automobile selon l'une quelconque des revendications précédentes, **caractérisée en ce que** des deux côtés de la bague de palier externe (5), on utilise à chaque fois un ressort ondulé (1, 11).

18. Entraînement à broche pour l'utilisation dans une direction de véhicule automobile selon l'une quelconque des revendications précédentes pour la suspension sur ressort axial d'un palier à roulement d'un écrou sphérique avec un ressort ondulé dans un entraînement à broche.
